# Europäisches Patentamt

## European Patent Office

## Office européen des brevets

(11) Veröffentlichungsnummer: **0 025 831**
**B1**

(12) # EUROPÄISCHE PATENTSCHRIFT

(45) Veröffentlichungstag der Patentschrift: **18.01.84**

(51) Int. Cl.³: **F 02 B 23/08, F 02 F 3/28**

(21) Anmeldenummer: **80104129.4**

(22) Anmeldetag: **16.07.80**

(54) Tauchkolben Ottomotor mit Kolben mit Erhebungen am Kolbenboden.

(30) Priorität: **15.09.79 DE 2937434**

(43) Veröffentlichungstag der Anmeldung:
**01.04.81 Patentblatt 81/13**

(45) Bekanntmachung des Hinweises auf die Patenterteilung:
**18.01.84 Patentblatt 84/3**

(84) Benannte Vertragsstaaten:
**DE FR GB IT**

(56) Entgegenhaltungen:
**DE - A - 2 501 518**
**DE - A - 2 755 531**
**FR - E - 69 242**
**US - A - 2 843 103**
**US - A - 4 162 661**

**Patents Abstracts of Japan Band 2, Nr. 21, 10. Februar 1978 Seite 7314M77**

(73) Patentinhaber: **MAHLE GMBH**
**Patentabteilung Pragstrasse 26-46**
**D-7000 Stuttgart 50 (DE)**

(72) Erfinder: **Kottmann, Helmut**
**Gluckstrasse 11**
**D-7067 Urbach (DE)**

(74) Vertreter: **Pfusch, Volker, Dipl.-Ing.**
**MAHLE GMBH, Patentabteilung Pragstrasse 26-46**
**D-7000 Stuttgart 50 (DE)**

Courier Press, Leamington Spa, England.

Tauchkolben Ottomotor mit Kolben mit Erhebungen am Kolbenboden

Die Erfindung betrifft einen Tauchkolben-Ottomotor nach dem Oberbegriff des Anspruchs 1. Die Erfindung geht von einem Stand der Technik aus, wie er in der DE—A1 25 01 518 beschrieben ist. Der dort eingesetzte Kolben weist an seinem Boden zwei unterschiedlich hohe Erhebungen auf. Zwischen den Erhebungen liegen Ventilein- und -auslaßöffnungen sowie die Zündkerze. Durch die Erhebungen am Kolbenboden wird im Bereich um die Zündkerze ein Brennraum gebildet, in dem das Brennstoffgemisch in allen Betriebszuständen des Motors gut und gleichmäßig gezündet werden kann.

Ein Nachteil dieser Kolbenbodenform besteht in bezug auf den Verbrennungsablauf darin, daß die Erhebungen, insbesondere die von der Zündkerze abgelegene hohe Erhebung, in den peripheren hinter den Erhebungen liegenden Brennraumbereichen durch die bei den Erhebungsmaxima gebildeten engen Quetschräume in Motorbetrieb Verbrennungsstörungen bewirken können. Darüberhinaus können Kolbenböden mit derart unregelmäßig geformten Erhebungen bei der Serienproduktion nur durch Formguß ohne mechanische Nachbearbeitung wirtschaftlich hergestellt werden.

Allerdings ist aus der FR—E—69.242 bei einem Zweitaktmotor ein Kolben mit einer kugelkalottenförmigen Erhebung am Kolbenboden bekannt. Eine solche Erhebung läßt sich aufgrund ihrer regelmäßigen rotationssymmetrischen Form im Gegensatz zu den Bodenerhebungen nach der DE—A1—25 01 518 leicht mechanisch nachbearbeiten, jedoch weist diese Erhebung nicht die für den Verbrennungsablauf bei dem gattungsgemäßen Otto-Motor erforderliche außermittige Lage auf.

Aus weiteren Schriften, z.B. DE—A1—27 55 531, US—A—4,162,661, US—A—2,843,103 und JP—A—52 137513, bekannte Bodenerhebungen weisen alle entweder den Nachteil einer nicht einfachen mechanischen Nachbearbeitbarkeit oder der nicht gattungsgemäßen Lage in bezug auf Ein- und Auslaßventile sowie der Lage der Zündkerze bei kugelschalenförmiger Zylinderausnehmung aus.

Hiervon ausgehend liegt der Erfindung die Aufgabe zugrunde, eine außermittig angeordnete Bodenerhebung so auszubilden, daß sie auf einfache Weise äußerst wirtschaftlich spanabhebend nachbearbeitet werden kann, wenn eine Nacharbeit zur Einhaltung einer bestimmten Kompressionshöhe erforderlich ist.

Gelöst wird diese Aufgabe durch eine Ausbildung des in dem Tauchkolben-Ottomotor nach dem Oberbegriff des Anspruchs 1 eingesetzten Kolbens mit den kennzeichnenden Merkmalen des Anspruchs 1.

Eine in bezug auf den Ablauf des Verbrennungsvorganges besonders günstige Ausführungsform gibt Anspruch 2 wieder.

Mit der erfindungsgemäßen Lösung nach Anspruch 1 erhält man bei optimaler Form des Verbrennungsraumes auf einfache Weise die Möglichkeit zu einer kostengünstigen mechanischen Nachbearbeitbarkeit des Kolbenbodens. Bei dem Stand der Technik ist es dagegen in all den Fällen, in denen eine außermittige Anordnung der Bodenerhebung erforderlich ist, üblich gewesen, eine zentrisch an dem Kolbenboden angeformte Kugelkalotte exzentrisch anzuschneiden, wie es z.B. die oben neben der französischen Patentschrift aufgezählten Schriften in überzeugender Weise zeigen.

Bei der erfindungsgemäßen Ausbildung des Kolbenbodens wird eine Ansammlung von Restgasen im peripheren Kolbenbodenbereich auch hinter den Bodenerhebungen weitgehendst vermieden. Dabei wird vorteilhafterweise davon ausgegangen, daß der Brennraum im Zylinderkopf durch das Inners der Fläche einer Kugelkalotte mit einem auf der Kolbenachse liegenden Mittelpunkt begrenzt wird und an seinem Öffnungsquerschnitt einen dem Zylinder gleichen Durchmesser aufweist. Denn dadurch ist sichergestellt, daß sich der Abstand zwischen kalottenförmiger Erhebung des Kolbenbodens und Brennraumbegrenzungswand im Zylinderkopf von radial außen nach innen stets stetig erweitert, so daß in radialer Richtung keine Strömungstoträume entstehen können. Dies hat zur Folge, daß Verbrennungsstörungen, wie z.B. Nachverbrennungen, im Motorbetrieb nicht auftreten. Bei der für den gattungsgemäßen Tauchkolben-Ottomotor vorgeschlagenen Kolbenbodenausführung werden ferner scharfe Übergänge an den Erhebungen des Kolbenbodens vermieden, so daß die Gefahr eines Anschmorens solcher scharfen Übergänge ganz erheblich gemindert ist. Ein weiterer Vorteil besteht darin, daß durch die Verwendung der geometrisch einfachen Form einer Kugelkalotte für die Erhebung am Kolbenboden eine geringe Kolbenbodengesamtoberfläche vorliegt. Dies führt zu einem verringerten Wärmefluß und damit zu einem möglichst geringen Verlust im thermodynamischen Kreisprozeß.

Ausführungsbeispiele der Erfindung sind in der Zeichnung dargestellt. Es zeigen:

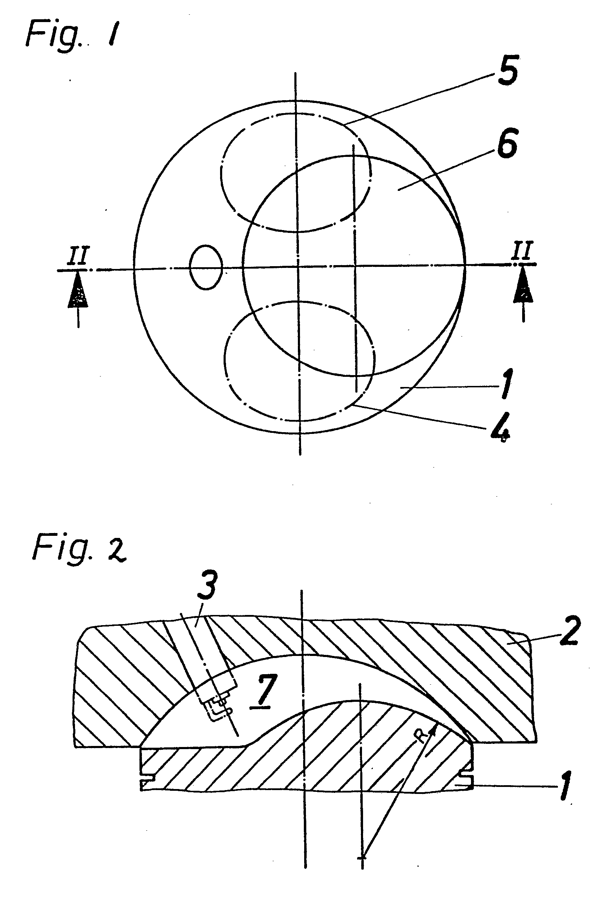

Fig. 1 eine Draufsicht auf einen Kolben mit nicht angeschnittener Kugelkalotte als Bodenerhebung,

Fig. 2 einen Längsschnitt durch den oberen Bereich des Kolbens nach Fig. 1 sowie den im Zylinderkopf an den Brennraum angrenzenden Bereich.

Es sind mit 1 der Kolben, mit 2 der Zylinderkopf, mit 3 die Zündkerze, sowie mit 4 und 5 die Ventileinlaß- bzw. -auslaßöffnungen bezeichnet.

Die Erhebung am Kolbenboden in der Form einer geschlossenen Kugelkalotte 6 liegt in bezug auf den Mittelpunkt des Radius dieser Kugelkalotte exzentrisch zur Kolbenlängsachse. Dadurch bildet sich das Volumen des Brennraumes 7 im Bereich unterhalb der Zündkerze 3 aus.

**Patentansprüche**

1. Tauchkolben-Ottomotor mit einem jedem Kolben (1) und Zylinder zugeordneten in den Zylinderkopf (2) ragenden Brennraum (7), dessen im Zylinderkopf (2) liegender Teil eine Ausnehmung ist, die durch eine Kugelfläche mit einem auf der Kolbenachse liegenden Mittelpunkt gebildet wird und die mit einem dem Zylinderdurchmesser gleichen Durchmesser in den Zylinder einmündet, und der Kolbenseitig begrenzt ist durch einen Erhebungen aufweisenden Kolbenboden, wobei die Erhebungen außerhalb des Bereiches der Zündkerzen liegen und in den je eine Ventilein- und Auslaßöffnung (4 bzw. 5) münden, deren Mittelpunkte etwa in einer durch die Kolbenlängsachse Verlaufenden Ebene liegen und bei dem ferner die Zündkerze (3) außerhalb der vorgenannten Ebene angeordnet ist, gekennzeichnet durch die Merkmale

(a) der Boden des Kolbens (1) weist nur eine Erhebung in der Form einer nicht angeschnittenen Kugelkalotte (6) auf und ist im übrigen eben
(b) der Mittelpunkt des Radius der Kugelkalotte (6) liegt außerhalb der Kolbenachse und
(c) der Schnittpunkt der Achse der Zündkerze (3) mit der den Brennraum (7) begrenzenden Ausnehmung im Zylinderkopf (2) und der Mittelpunkt des Radius der Kugelkalotte (6) liegen auf verschiedenen Seiten der durch die Kolbenlängsachse verlaufenden Ebene mit den Mittelpunkten der Ventilein- und Auslaßöffnungen (4, 5).

2. Tauchkolben-Ottomotor mit Kolben nach Anspruch 1, dadurch gekennzeichnet, daß die Größe des Durchmessers des Schnittkreises der Kugelkalotte (6) mit dem ebenen Teil des Bodens des Kolbens (1) gleich dem maximalen Abstand zwischen dem Schnittpunkt der Achse der Zündkerze (3) mit dem ebenen Teil des Bodens des Kolbens (1) im oberen Totpunkt des Kolbens (1) und der Peripherie des Bodens des Kolbens (1) ist.

**Revendications**

1. Moteur Otto à piston plongeur, comportant une chambre de combustion (7) associée à chaque piston (1) et cylindre et saillant dans la culasse (2) du cylindre et dont la partie située dans la culasse (2) du cylindre consiste en un évidement qui est formé par une surface sphérique dont le centre se trouve sur l'axe du piston et qui débouche dans le cylindre avec un diamètre égal à celui de ce cylindre, cette chambre étant délimitée du côté du piston par un fond de piston présentant des protubérances, ces protubérances étant situées à l'extérieur de la région des bougies d'allumage et débouchant chacune dans un orifice d'admission et d'échappement respectif (4 ou 5) dont les centres se trouvent sensiblement dans un plan passant par l'axe longitudinal du piston, la bougie d'allumage (3) se trouvant en outre à l'extérieur du plan précité, caractérisé par le fait que

(a) le fond du piston (1) présente seulement une protubérance sous la forme d'une calotte sphérique (6) non découpée et est pour le reste de configuration plane
(b) le centre du rayon de la calotte sphérique (6) est situé à l'extérieur de l'axe du piston et
(c) le point d'intersection entre l'axe de la bougie d'allumage (3) et l'évidement dans la culasse (2) du cylindre qui délimite la chambre de combustion (7) et le centre du rayon de la calotte sphérique (6) se trouvent sur des côtés différents du plan passant par l'axe longitudinal du piston et dans lequel se trouvent les centres des orifices d'admission et d'échappement (4, 5).

2. Moteur Otto à piston plongeur ayant un piston selon la revendication 1, caractérisé par le fait que la grandeur du diamètre de la circonférence d'intersection de la calotte sphérique (6) avec la partie plane du fond du piston (1) est égale à la distance maximale comprise entre le point d'intersection de l'axe de la bougie d'allumage (3) avec la partie plane du fond du piston (1) au point mort supérieur de ce piston (1), et la périphérie du fond dudit piston (1).

**Claims**

1. A trunk-piston spark-ignition engine comprising a combustion chamber (7) which is associated with each piston (1) and cylinder and projects into the cylinder head (2) and whose portion that is located in the cylinder head (2) is a recess, which is formed by a spherical surface with a centre that lies on the piston axis and which opens into the cylinder with a diameter that is identical with the cylinder diameter, and which is bounded at the piston end by a piston top having elevations, which lie outside the zone of the spark plugs, and into which there open respectively one valve inlet port and one valve outlet port (4 and 5), whose centres lie approximately in a plane that extends through the piston longitudinal axis, and on which, furthermore, the spark plug (3) is arranged outside the aforementioned plane, characterised by the following features:—

(a) the top of the piston (1) has only one elevation in the shape of a non-intersected spherical cap (6) and, for the rest, is flat,

(b) the centre of the radius of the spherical cap (6) lies outside the piston axis, and

(c) the point of intersection of the axis of the spark plug (3) with the recess, bounding the combustion chamber (7), in the cylinder head (2) and the centre of the radius of the spherical cap (6) lie on different sides of the plane extending through the piston longitudinal axis and having the centres of the valve inlet and outlet ports (4, 5).

2. A trunk-piston spark-ignition engine with a piston as claimed in Claim 1, characterised in that the size of the diameter of the intersection circle of the spherical cap (6) with the flat part of the top of the piston (1) is equal to the maximum distance between the point of intersection of the axis of the spark plug (3) with the flat part of the top of the piston (1) in the top dead centre of the piston (1) and the periphery of the top of the piston (1).

*Fig. 1*

*Fig. 2*